# EUROPÄISCHE PATENTSCHRIFT

(11) **EP 2 461 276 B1**
(45) Veröffentlichungstag und Bekanntmachung des Hinweises auf die Patenterteilung: **28.03.2018**
(21) Anmeldenummer: 11008942.2
(22) Anmeldetag: 10.11.2011
(51) Int. Cl.: G06K 19/077, B23D 59/00, B27D 1/00, B27M 3/00, B32B 21/04, B65D 19/00, B66F 9/00, G09F 3/00

(54) **Verfahren zur Verarbeitung plattenförmiger Erzeugnisse**
Method for processing board-shaped products
Procédé de traitement de produits sous forme de plaques

(30) Priorität: 01.12.2010 DE 102010053081
(43) Veröffentlichungstag der Anmeldung: 06.06.2012
(73) Patentinhaber: IMA Klessmann GmbH Holzbearbeitungssysteme, 32312 Lübbecke (DE); Fast Forward Gesellschaft für Betriebslogistik und Informatik GmbH, 32584 Löhne (DE)
(72) Erfinder: Hampel, Thomas, 32312 Lübbecke (DE); Redeker, Günter, 32351 Stemwede (DE); Ermlich, Andrej, 32584 Löhne (DE); Koitka, Horst, 32549 Bad Oeynhausen (DE)
(74) Vertreter: Schober, Mirko

(56) Entgegenhaltungen:
- EP-A1- 2 230 626
- DE-A1-102006 015 899
- DE-A1-102009 028 489
- DE-U1- 20 005 975
- DE-U1-202005 020 427
- DE-U1-202008 008 192
- FR-A1- 2 697 801
- FR-A1- 2 810 436
- FR-A1- 2 902 222
- FR-A1- 2 913 134
- FR-A1- 2 928 350
- US-A- 4 908 503
- US-A- 5 818 030
- US-A1- 2004 212 501
- US-A1- 2010 033 297
- US-A1- 2010 213 264
- US-B1- 6 193 163

## Beschreibung

Die Erfindung betrifft ein Verfahren zur Erzeugung plattenförmiger Erzeugnisse.

Es ist bekannt, bei der Möbelfertigung die einzelnen Teile zu deren Identifikation zu kennzeichnen. Dies hat den Vorteil, dass sich dadurch die Logistik vereinfachen lässt und sich etwa Teile, die zu unterschiedlichen Kommissionen gehören, diesen Kommissionen eindeutig zuordnen lassen. Im Übrigen kann natürlich eine Kennzeichnung auch die Nachverfolgung der Teile vereinfachen. Nach dem Einbau einer solchen Kennzeichnung kann das Möbelteil eindeutig identifiziert werden, was z.B. auch dessen Austausch vereinfacht. Neben der Kennzeichnung durch Aufdrucke oder dergleichen ist z.B. aus EP 2 230 626 A1 bekannt, elektrische bzw. elektronische Bauteile, z.B. in Form von sog. RFID-Tags, in ein Möbelteil zu integrieren. Dies geschieht dadurch, dass dieser RFID-Tag auf ein Kantenband aufgebracht wird, und zwar auf der Innenseite, welche anschließend mit der Schmalseite einer Möbelplatte verklebt wird. Hierzu muss in die Schmalseite eine im Querschnitt etwa V-Förmige Vertiefung eingefräst werden, damit das Kantenband mit dem daran befestigten RFID-Tag an der Schmalseite befestigt werden kann ohne dass in der Schmalseite Erhöhungen im Bereich des RFID-Tags auftreten.

Nachteilig an dieser Vorgehensweise ist, dass der RFID-Tag beim Bekantungsvorgang durch die Andruckrollen des entsprechenden Bekantungsaggregats oder/und die Wärme des verwendeten Klebers beschädigt werden kann, weil diese gegen das Kantenband drücken und damit der RFID-Tag gegen den Boden der Aussparung gedrückt wird.

Die FR 2 810 436 A1, die FR 2 913 134 A1 und US 4 908 503 offenbaren Kennzeichnungsmittel für die Kennzeichnung von Baumstämmen, Rohholz und dergleichen. Derartige Kennzeichnungsmittel sind jedoch nicht für die Verwendung im Bereich der Schmalseiten plattenförmiger Werkstücke geeignet, da sie sich aufgrund ihrer Beschaffenheit nicht in sinnvoller Weise mit einem Kantenband kaschieren lassen.

Die FR 2 928 350 A1 und die DE 20 2005 020 427 U1 offenbaren Kennzeichnungsmittel auf RFID-Basis, die der Erfassbarkeit und Verfolgbarkeit von Warenträgern, wie rollbaren Regalen, Rollcontainern und/oder Paletten, dienen. Der RFID-Kennzeichnungsmittel kann auf unterschiedlichem Wege geschehen. In allen beschriebenen Fällen bleibt das Kennzeichnungsmittel jedoch nach außen sichtbar. Eine unsichtbare Anbringung unter einem Kantenband wird nicht gezeigt.

Die US 2004/0212501 A1 beschreibt ein Verfahren zur Warenverfolgung, welches auf Kennzeichnungsmitteln beruht, die an diese Waren angebracht werden. Die Kennzeichnungsmittel werden hierbei jedoch von einem Bilderkennungssystem erfasst, was eine verdeckte Anbringung, wie beispielsweise unter einem Kantenband, grundsätzlich ausschließt.

Die US 6 193 163 B1 offenbart eine Chipkarte mit einem herausnehmbaren Chip. Der Chip wird jedoch nicht zuletzt um seine elektrische Kontaktierung zu ermöglichen, auf eine Art und Weise in die Chipkarte eingesetzt, bei der er nach außen sichtbar bleibt.

Aufgabe der Erfindung ist es daher, ein Verfahren der eingangs genannten Art anzugeben, bei welchem ein elektrisches oder elektronisches Bauteil vorgesehen werden kann, welches auch beim Anbringen desselben nachgelagerten Verfahrensschritten nicht der Gefahr von Beschädigungen unterworfen ist und insbesondere dauerhaft integriert bleibt.

Die Erfindung ist in den unabhängigen Ansprüchen definiert. Vorteilhafte Ausführungsformen finden sich in den abhängigen Ansprüchen.

Das erfindungsgemäße Verfahren zur Verarbeitung plattenförmiger Erzeugnisse, bei denen es sich insbesondere um solche aus Holz- oder Holzaustauschstoffen handelt, sieht vor, dass das eine individualisierende Kennzeichnung tragende Bauteil, bei dem es sich bevorzugt um ein RFID-Bauteil handelt, auf, an oder in einem Trägermaterial vorgesehen ist. Dies geschieht bevorzugt, nachdem das plattenförmige Erzeugnis aus einer großformatigen Platte in insbesondere schnittoptimierte Einzelteile aufgeteilt worden ist. Das Bauteil muss dabei kein separates oder separierbares Bauteil sein, es kann vielmehr auch einstückig oder monolithisch mit dem Trägermaterial ausgebildet sein. Dieses Trägermaterial ist bevorzugt so ausgebildet, dass es zusammen mit dem Bauteil formschlüssig in der Ausnehmung Platz findet. Besonders bevorzugt ist das Bauteil nach Art eines Sandwichaufbaus zwischen zwei Schichten des Trägermaterials eingebettet. Nach einer vorteilhaften Variante wird die Ausnehmung erst durch das Einbringen des Bauteils bzw. Trägermaterials erzeugt. Hierzu kann das Trägermaterial mit dem Bauteil beispielsweise als Schraube ausgebildet sein.

Im Gegensatz zum Stand der Technik wird das Bauteil so in das plattenförmige Erzeugnis eingeschoben, dass dessen Oberfläche senkrecht zur Schmalseite des plattenförmigen Erzeugnisses liegt. Nicht nur wird das Bauteil von Ober- und Unterseite des plattenförmigen Erzeugnisses besser geschützt, es kann auch die Schmalseite nach dem Einschieben des Trägermaterials in der gewohnten Weise vor dem Bekanten angefräst oder auf andere Weise bearbeitet werden, ohne dass eine Aussparung auf der Schmalseite vor dem Bekanten zurückbleibt. Folglich lassen sich auf diese Weise die Kantenbänder mit derselben Qualität an der Schmalseite befestigen wie in den Fällen, in welchen die Platten ohne elektronisches Bauteil ausgestattet werden.

Bevorzugt ist vorgesehen, dass das Trägermaterial eine äußere Form aufweist, die wenigstens teilweise etwa komplementär zur Ausnehmung ausgebildet ist. Insbesondere kann die Ausnehmung dabei mittels einer Sägeeinrichtung in Form einer im Längsschnitt etwa kreissegmentförmigen oder Kreisbögen aufweisenden Nut eingebracht werden. Durch einen Formschluss kann insbesondere verhindert werden, dass der Einschub bei nachfolgenden Bearbeitungsschritten wieder aus der Ausnehmung heraus gelangt. Ggf. kann das Trägermaterial zusätzlich mit der Platte verklebt oder anderweitig stoff- oder kraft- oder reibschlüssig verbunden werden. Bevorzugt kann dabei am Bauteil eine elastische Lasche oder dergleichen ausgebildet sein, welche beim Einschieben des Bauteils gegen die Wandung der Ausnehmung in der Platte zu Anlage kommt und so eine Vorspannung aufbaut, die das unbeabsichtigte Verrutschen des Bauteils vermeidet. Hierzu kann auch ein anderes Fixierelement, etwa aus einem elastischen Material wie Gummi vorgesehen sein.

Bevorzugt wird das Trägermaterial dabei so eingeschoben, dass es mit einem Abschnitt aus der Schmalseite hervorsteht. In einem Nachbearbeitungsschritt kann dann der Überstand mit der Schmalseite bündig gefräst werden, so dass die volle Schmalseite für einen anschließenden Bekantungsvorgang zur Verfügung steht.

Man erhält durch das erfindungsgemäße Verfahren ein plattenförmiges Erzeugnis, bei welchem das elektrische oder elektronische Bauteil an einem Trägermaterial vorgesehen ist, welches wenigstens teilweise formschlüssig in die Ausnehmung eingeschoben oder eingebracht ist. Dieses Erzeugnis lässt sich besonders gut weiter verarbeiten und insbesondere bekanten und weist zudem maximalen Schutz für das eingebrachte Bauteil auf, so dass die Gefahr von Beschädigungen desselben weitgehend ausgeschlossen werden kann.

Die Erfindung wird nachfolgend anhand der Zeichnungen in den Figuren 1 bis 7 schematisch näher erläutert.
Figur 1 zeigt einen Schnitt durch das erfindungsgemäße plattenförmige Erzeugnis parallel zur Ober/Unterseite der Platte.
Figur 2 zeigt schematisch eine perspektivische Darstellung des Einbringens der Aufnahme in das plattenförmige Erzeugnis von dem Einsetzen des Trägermaterials.
Figur 3 zeigt schematisch eine perspektivische Darstellung des plattenförmigen Erzeugnisses nach dem Einsetzen des Trägermaterials.
Figur 4 zeigt schematisch einen Ausschnitt aus einer erfindungsgemäßen Vorrichtung in Draufsicht.
Figur 5 zeigt ebenfalls einen Ausschnitt aus einer erfindungsgemäßen Vorrichtung in Draufsicht.
Figur 6 zeigt in Draufsicht eine Ausführungsform der Zuführeinrichtung.
Figur 7 zeigt die in Figur 6 gezeigte Zuführeinrichtung in Schnittansicht.

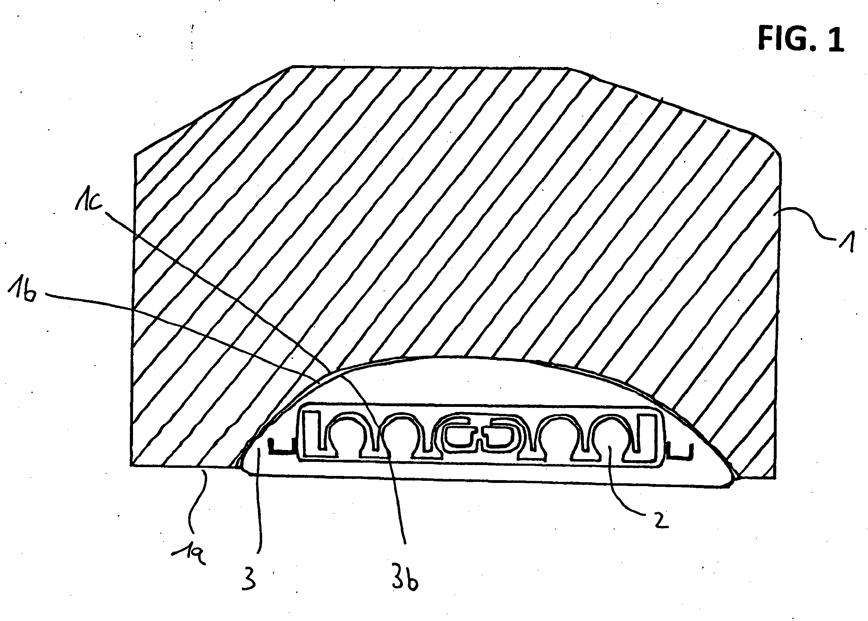

Das in Figur 1 gezeigte plattenförmige Erzeugnis 1 (im Folgenden Platte genannt) weist Schmalseiten auf, von denen eine hier mit 1a gekennzeichnet ist. In der Schmalseite 1a ist eine Ausnehmung 1b vorgesehen, welche im gezeigten Beispiel etwa kreissegmentförmig ist und insofern über Radien 1c verfügt. In die Ausnehmung 1b eingesetzt ist das Trägermaterial 3, in, an oder auf welchem ein eine individualisierende Kennzeichnung aufweisendes, insbesondere elektrisches oder elektronisches, Bauteil 2 wie ein RFID-Bauteil, hier in Form von Leiterschleifen, angeordnet ist.

Die Funktion des Bauteils 2 ist allgemein bekannt und wird daher nicht weiter erläutert. Das Trägermaterial 3 ist bevorzugt, wie im Beispiel gezeigt, etwa komplementär zur Ausnehmung 1b ausgebildet und weist bevorzugt ebenso eine kreissegmentförmige Form mit Radien 3b auf. Beispielsweise kann so ein Formschluss zwischen dem Trägerelement 3 und der Ausnehmung 1b erzeugt werden.

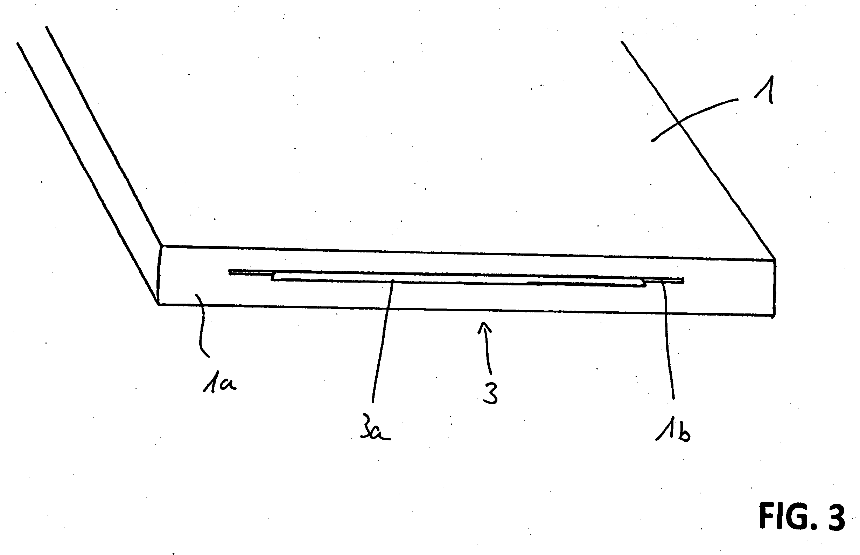

Bevorzugt sind Ausnehmung 1b und Trägerelement 3 so bemessen, dass ein Abschnitt 3a (vgl. Figur 3) nach dem Einschieben des Trägerelements 3 in die Ausnehmung 1b gegenüber der Schmalseite 1a vorsteht, welche anschließend etwa durch ein Fräsaggregat mit der Schmalseite bündig gefräst werden kann, so dass im Bereich der Schmalseite 1a eine vollflächige Bekantung mit einem Kantenband möglich ist. Natürlich ist ein solcher Vorsprung nicht unbedingt erforderlich; nach dem Einschieben des Trägerelements 3 können beispielsweise noch vorhandene Löcher oder Vertiefungen ausgefüllt werden.

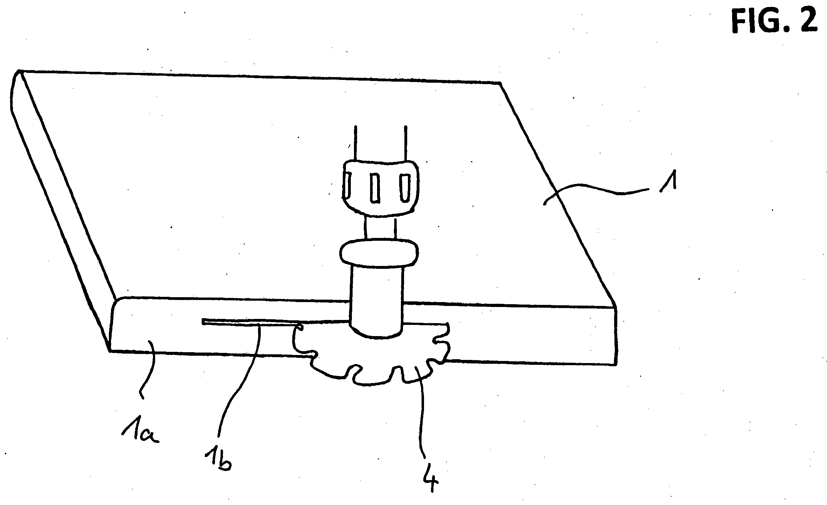

Zur Herstellung der erfindungsgemäßen Platte 1 wird, wie in Figur 2 angedeutet, zunächst bevorzugt mittels einer Sägeeinrichtung 4, beispielsweise einer Kreissäge, in der Verlaufsrichtung der Schmalseite 1a die oben beschriebene Ausnehmung 1b erzeugt. Alternativ kann die Ausnehmung auch durch das Einbringen des Trägermaterials mit dem Bauteil selbst erzeugt werden, etwa wenn die einzubringende Kombination aus Trägermaterial 3 und Bauteil 2 als Schraube ausgebildet ist. Dies kann wie die Bekantung von Schmalseiten 1a im Durchlaufverfahren geschehen und ist so leicht in den Bekantungsprozess bestehender Maschinen integrierbar.

Anschließend wird - wie in Figur 3 gezeigt - das mit dem Bauteil 2 bestückte Trägermaterial 3, bei welchem es sich um Holz oder/ und Kunststoff oder ein anderes Material handeln kann, welches insbesondere mehrschichtig, z.B. sandwichartig das Bauteil 2, umschließt, in die Ausnehmung 1b eingebracht. In das Trägermaterial 3 kann das Bauteil 2 auch integriert, beispielsweise eingegossen oder eingeformt, oder auf diesem aufgedruckt sein. Ggf. wird der nach dem Einbringen noch aus der Ausnehmung 1b herausragende Vorsprung 3a des Trägermaterials 2 in einem nicht gezeigten nachfolgenden Schritt mit der Oberfläche der Schmalseite 1a zur Vorbereitung eines ggf. nachfolgenden Bekantungsschritts bündig gefräst. Bevorzugt ist vorgesehen, dass das Bauteil, insbesondere mit dem Trägermaterial, wenigstens teilweise umgossen oder umspritzt ist. Das Trägermaterial kann in vielen verschiedenen Formen ausgestaltet sein, insbesondere kann es mit dem Bauteil als Dübel, Platte, Karte, Stange, Quader oder Schraube ausgebildet sein.

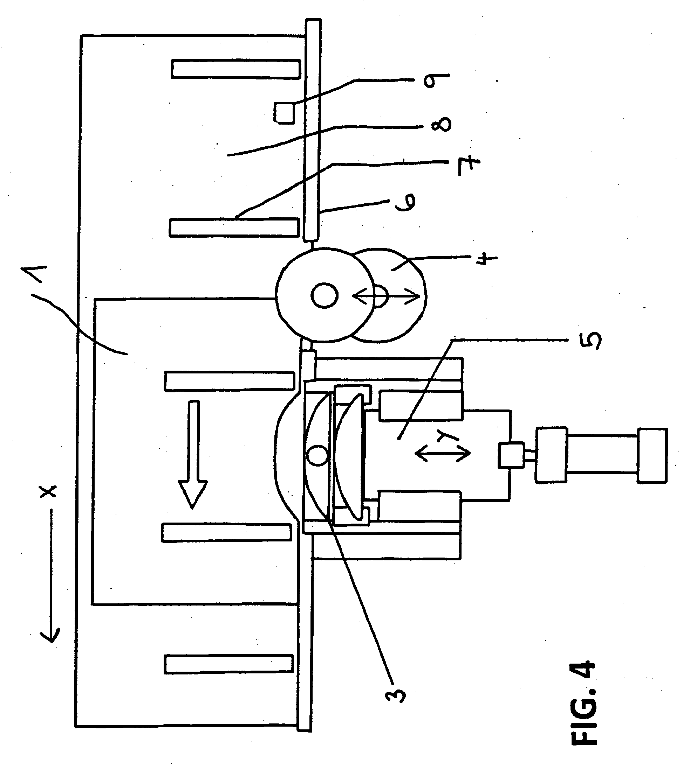

In den Figuren 4 bis 7 ist eine erfindungsgemäße Vorrichtung gezeigt, mit der sich insbesondere das oben geschilderte Verfahren durchführen lässt. Dargestellt ist eine Vorrichtung, die sich für das Durchlaufverfahren eignet, die Komponenten können aber auch gleichermaßen für ein Bearbeitungszentrum eingesetzt werden, für welches sich das erfindungsgemäße Verfahren und die zugehörige hier beschriebene Vorrichtung gleichermaßen eignet.

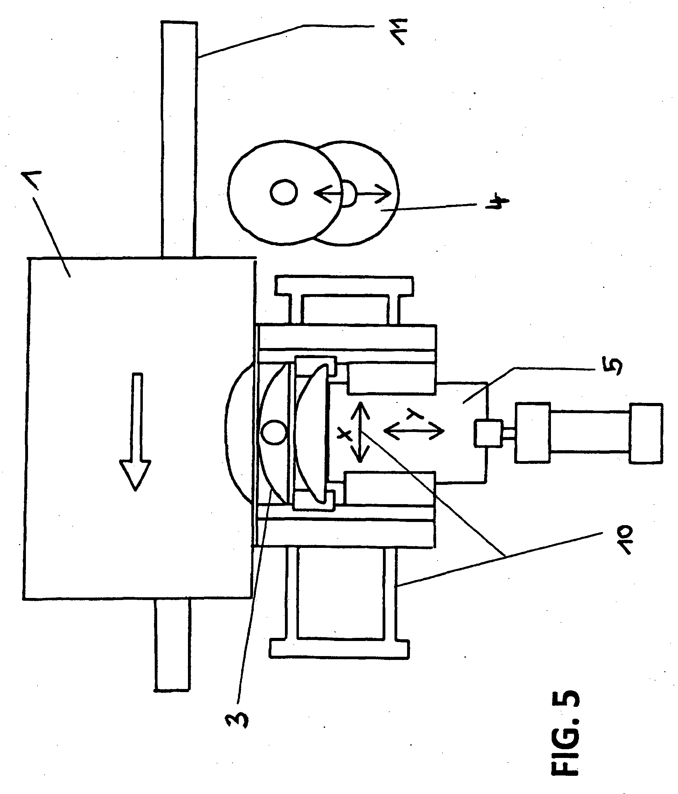

In Figur 4 ist eine Transporteinrichtung 8 mit Transportrollen 7 dargestellt, auf der eine Platte 1 in Pfeilrichtung transportiert wird. Dabei wird die Platte 1 gegen den Anschlag 6 gehalten; in der Ausführungsform in Figur 5 wird die Platte 1 in Pfeilrichtung aufliegend auf einem Kettenband 11 geführt. In der in Figur 4 dargestellten Variante wird mittels eines Sensors 9 die Wegmessung initiiert, d.h. der von der Platte 1 zurückgelegte Weg erfasst. Die Wegmessung ist allgemein bekannt und wird daher hier nicht weiter erläutert. Weiter ist vorgesehen ein Bearbeitungsaggregat 4, welches quer zur Laufrichtung X des Werkstücks 1 verfahrbar ist und bei dem es sich im gezeigten Beispiel um eine Kreissäge handelt, mit der eine Ausnehmung bzw. Nut in das Werkstück 1 einbringbar ist. Das Bearbeitungsaggregat 4 kann je nach Form des einzubringenden Trägerelements 3 bzw. Bauteils 2 auch ein anderes Werkzeug, beispielsweise einen Bohrer für das Einbringen von Dübeln, aufweisen. Weiter ist eine Zuführeinrichtung 5 dargestellt, welche auch mit dem Bearbeitungsaggregat 4 kombiniert sein kann, mit welcher das hier mit 3 bezeichnete Trägerelement 3 mit dem Bauteil 2 in die im Werkstück erzeugte Ausnehmung einbringt. Im in den Figuren 4 bis 7 gezeigten Beispiel umfasst die Zuführeinrichtung 5 einen Schieber, der wenigstens in Richtung Y quer zur Laufrichtung X bzw. quer zur mit der Ausnehmung 1b versehenen oder zu versehenden Schmalseite 1a der Platte 1 verfahrbar ist. In Figur 5 ist außerdem eine Verstellung des Schiebers 5 bzw. der Zuführeinrichtung entlang der Laufrichtung X bzw. entlang der mit der Ausnehmung 1b versehenen oder zu versehenden Schmalseite 1a der Platte 1 vorgesehen.

Bevorzugt wird in der Variante der Figur 4 die Platte 1 mit maximalem Vorschub bis zum Bereich des Bearbeitungsaggregates 4 vorgefahren. Dabei wird zu den nachfolgenden Platten eine Lücke gebildet. Nun wird das Bearbeitungsaggregat 4 an der Platte 1 angesetzt und der Einschnitt der Ausnehmung 1b erfolgt unter Vorschub der Platte mit konstanter Geschwindigkeit. Befindet sich die Ausnehmung 1b im Bereich des Schiebers 5 der Zuführeinrichtung, ist oder wird dieser mit einem Trägerelement 3 beladen, welches sodann in die Ausnehmung 1b über den Y-Vorschub des Schiebers 5 eingebracht wird. Dazu wird der Vorschub der Platte 1 gestoppt, bis sich das Trägerelement an seiner Endposition in der Platte 1 befindet. Anschließend wird die Platte wieder mit maximalem Vorschub in Laufrichtung X befördert und kann ggf. weiteren Bearbeitungsschritten zugeführt werden.

In der in Figur 5 gezeigten Alternative (die aber auch mit der Ausführungsform aus Figur 1 kombinierbar ist) wird zusätzlich der Schieber 5 beim Einsetzen in Laufrichtung X mitgeführt, so dass ein vollständiges Anhalten der Platte 1 vermieden werden kann.

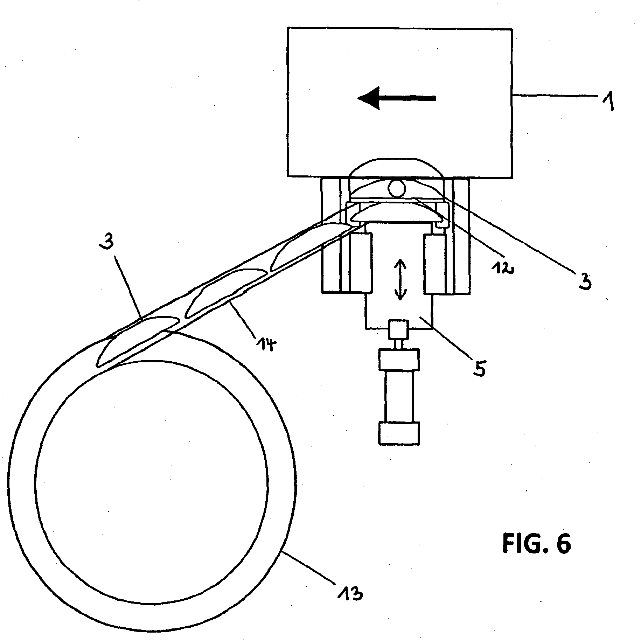

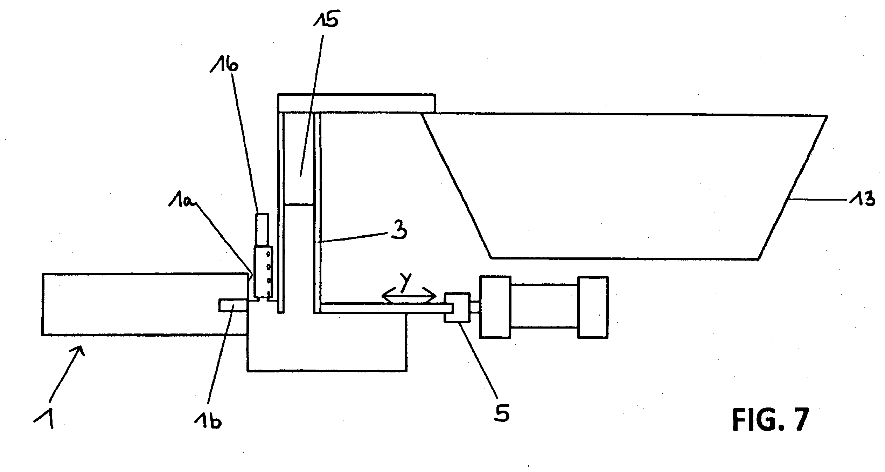

In den Figuren 6 und 7 ist exemplarisch eine Ausführungsform der Zuführeinrichtung gezeigt. Diese weist bevorzugt neben dem schon erwähnten Schieber 5 einen Rütteltopf 13, ein Magazin 15 und einen den Rütteltopf 13 mit dem Magazin verbindenden Kanal 14 auf. Die vorkonfektionierten Trägerelemente 3 mit dem Bauteil 2 werden in einem Rütteltopf gesammelt und durch Rütteln in den Kanal 3 hinein vereinzelt, so dass diese hier hintereinander dem mit dem Kanal 14 verbundenen Magazin 15 zugeführt werden können. Im Magazin 15 liegen die Teile 3 übereinander und können einzeln vom Schieber 5 in Richtung Y und damit in Richtung der Schmalseite 1a der Platte in die Ausnehmung 1b verbracht werden. Nach Einsetzen eines Teils 3 in eine Platte 1 rutschen so von oben die Teile 3 im Magazin 15 nach.

Zusätzlich kann, wie in Figur 7 gezeigt, eine Bearbeitungseinheit 16 vorgesehen sein, die nicht notwendigerweiser Teil der Zuführeinrichtung sein muss. Die Bearbeitungseinheit 16 dient dazu, das in die Platte 1 einzubringende Trägerelement 3 mit wenigstens einem Fixierelement 12 zu versehen. Dieses Fixierelement dient dazu, das Trägerelement 3 in der Ausnehmung 1b zu halten, so dass das Trägerelement nach dem Einbringvorgang in der Ausnehmung gehalten wird und nicht unbeabsichtigt herausrutschen kann. Als Fixierelemente kommen neben Klebstoff auch auf das Trägerelement 3 aufgebrachte oder darin eingestanzte elastische Zungen oder Laschen in Betracht. Auch können andere elastische Elemente als Fixierelemente dienen, die beim Einschieben in die Ausnehmung 1b verformt oder bewegt werden und dabei eine Vorspannung gegen die Wand der Ausnehmung 1b erzeugen, die das Trägerelement 3 in der Ausnehmung 1b halten. Die Bearbeitungseinheit 16 kann daher sowohl eine Verspendevorrichtung, z.B. für Kleber oder separate Fixierelemente, als auch ein Werkzeug zum Einarbeiten, z.B. Stanzen, von geeigneten Fixierelementen umfassen.

## Patentansprüche

1. Verfahren zur Verarbeitung plattenförmiger Erzeugnisse (1) aus Holz- oder Holzaustauschstoffen, bei welchem das plattenförmige Erzeugnis (1) im Bereich einer Schmalseite (1a) mit einem eine individualisierende Kennzeichnung aufweisenden elektrischen oder elektronischen Bauteil (2) bestückt wird, wobei hierzu an der Schmalseite (1a) eine Ausnehmung (1b) eingebracht wird, wobei das Bauteil (2) auf, an oder in einem Trägermaterial (3) angeordnet ist, welches in die Ausnehmung (1b) eingeschoben wird,
**dadurch gekennzeichnet,**
**dass** nach dem Einschieben des Trägermaterials (3) eine Bekantung der Schmalseite (1a) durchgeführt wird.

2. Verfahren nach Anspruch 1,
**dadurch gekennzeichnet,**
**dass** das individualisierende Kennzeichnung aufweisende Bauteil (2) ein RFID-Bauteil ist.

3. Verfahren nach einem der vorherigen Ansprüche,
**dadurch gekennzeichnet,**
**dass** das Trägermaterial (3) eine äußere Form aufweist, die wenigstens teilweise etwa komplementär zur Ausnehmung (1b) ausgebildet ist.

4. Verfahren nach einem der vorherigen Ansprüche,
**dadurch gekennzeichnet,**
**dass** die Ausnehmung (1b) mittels einer Sägeeinrichtung (4) in Form einer im Längsschnitt etwa kreissegmentförmigen oder Kreisbögen aufweisenden Nut eingebracht wird.

5. Verfahren nach einem der vorherigen Ansprüche,
**dadurch gekennzeichnet,**
**dass** das Trägermaterial (3) so eingeschoben oder eingebracht wird, dass es mit einem Abschnitt (3a) aus der Schmalseite (1a) hervorsteht.

6. Verfahren nach Anspruch 5,
**dadurch gekennzeichnet,**
**dass** der Abschnitt (3a) nachbearbeitet wird, so dass er mit der Schmalseite (1a) bündig liegt.

7. Verfahren nach einem der vorherigen Ansprüche,
**dadurch gekennzeichnet,**
**dass** vor dem Einbringen oder Einschieben das Trägermaterial (3) mit wenigstens einem Fixierelement (12) versehen wird.

8. Verfahren nach einem der vorherigen Ansprüche,
**dadurch gekennzeichnet,**
**dass** die Ausnehmung (1b) beim oder durch das Einbringen des Trägermaterials (3) erzeugt wird.

9. Plattenförmiges Erzeugnis (1) aus Holz- oder Holzaustauschstoffen,
mit einem eine individualisierende Kennzeichnung aufweisenden elektrischen oder elektronischen Bauteil (2) in Form eines RFID-Bauteils, welches an der Schmalseite (1a) in eine Ausnehmung (1b) eingebracht ist,
wobei das Bauteil (2) auf, an oder in einem Trägermaterial (3) vorgesehen ist, welches wenigstens teilweise formschlüssig in die Ausnehmung (1b) eingeschoben oder eingebracht ist,
**dadurch gekennzeichnet,**
**dass** die Ausnehmung (1b) eine Nut ist, wobei nach dem Einschieben oder Einbringen des Trägermaterials (3) eine Bekantung der Schmalseite (1a) durchgeführt ist.

10. Erzeugnis nach Anspruch 9,
**dadurch gekennzeichnet,**
**dass** das Trägermaterial (3) eine äußere Form aufweist, die wenigstens teilweise etwa komplementär zur Ausnehmung (1b) ausgebildet ist.

11. Erzeugnis nach einem der vorherigen Ansprüche 9 oder 10,
**dadurch gekennzeichnet,**
**dass** die Ausnehmung (1b) eine Nut ist, die im Längsschnitt etwa kreissegmentförmig ist oder Kreisbögen aufweist.

12. Erzeugnis nach einem der Ansprüche 9 bis 11,
**dadurch gekennzeichnet,**
**dass** das Trägermaterial ein Holzwerkstoff oder Kunststoff ist.

13. Erzeugnis nach einem der Ansprüche 9 bis 12,
**dadurch gekennzeichnet,**
**dass** das Trägermaterial (3) durch wenigstens zwei Schichten gebildet wird, zwischen denen das Bauteil (2) angeordnet ist.

14. Erzeugnis nach einem der Ansprüche 9 bis 13,
**dadurch gekennzeichnet,**
**dass** das Bauteil (2), insbesondere mit dem Trägermaterial, wenigstens teilweise umgossen oder umspritzt ist.

15. Erzeugnis nach einem der Ansprüche 9 bis 14,
**dadurch gekennzeichnet,**
**dass** das Trägermaterial (3) mit dem Bauteil (2) als Dübel, Platte, Karte, Stange, Quader oder Schraube ausgebildet ist.

16. Erzeugnis nach einem der Ansprüche 9 bis 15,
**dadurch gekennzeichnet,**
**dass** am Trägermaterial (3) wenigstens ein Fixierelement (12) vorgesehen ist.

17. Vorrichtung zur Bearbeitung plattenförmiger Erzeugnisse (1) aus Holz- oder Holzaustauschstoffen nach einem der Ansprüche 9 bis 16, mit einem Bearbeitungsaggregat (4) zum Einbringen der Nut in die Schmalseite (1a) des Erzeugnisses und einer Zuführeinrichtung (5) zur Zuführung des in die Ausnehmung (1b) einzuschiebenden oder einzubringenden, auf, an oder in einem Trägermaterial (3) vorgesehenen, eine individualisierende Kennzeichnung aufweisenden Bauteils (2),
**dadurch gekennzeichnet,**
**dass** die Vorrichtung ein weiteres Bearbeitungsaggregat aufweist, mit dem eine Bekantung der Schmalseite (1a) durchgeführt werden kann.

18. Vorrichtung nach Anspruch 17,
**dadurch gekennzeichnet,**
**dass** die Zuführeinrichtung einen Schieber (5) und einen Vorrat (15, 13) zur Bevorratung der einzuschiebenden oder einzubringenden in, an oder auf dem Trägermaterial (3) vorgesehenen Bauteile (2) aufweist, wobei der Schieber (5) wenigstens in einer Richtung (Y) quer zur mit der Ausnehmung (1b) versehenen oder zu versehenden Schmalseite (1a) des Erzeugnisses (1) verfahrbar ist.

19. Vorrichtung nach Anspruch 18,
**dadurch gekennzeichnet,**
**dass** die Zuführeinrichtung (5) entlang der mit der Ausnehmung (1b) versehenen oder zu versehenden Schmalseite (1a) des Erzeugnisses (1) verfahrbar ist

20. Vorrichtung nach einem der Ansprüche 17 bis 19,
**dadurch gekennzeichnet,**
**dass** weiter eine Bearbeitungseinheit (16) vorgesehen ist, welche in das Trägermaterial (3) ein Fixierelement (12) ein- oder auf dem Trägermaterial (3) aufbringt.

## Claims

1. Method for processing board-shaped products (1) of wood or wood substitutes, in which the board-shaped product (1) is fitted in the region of a narrow side (1a) with an electric or electronic component (2) comprising an individualising code, wherein for this purpose a recess (1b) is formed on the narrow side (1a) wherein the component (2) is arranged on, against or in a carrier material (3) which is inserted into the recess (1b), **characterised in that** after inserting the carrier material (3) an edge processing is carried out along the narrow side (1a).

2. Method according to claim 1, **characterised in that** the component (2) having the individualising coding is an RFID component.

3. Method according to one of the preceding claims **characterised in that** the carrier material (3) has an exterior shape which is formed at least in part more or less complementary in relation to the recess (1b).

4. Method according to one of the preceding claims **characterised in that** the recess (1b) is introduced, by means of a sawing device (4), in the form of a groove having in longitudinal section an approximately circular segment or circular arc shape.

5. Method according to one of the preceding claims **characterised in that** the carrier material (3) is inserted or introduced so that it protrudes by a portion (3a) out from the narrow side (1a).

6. Method according to claim 5 **characterised in that** the portion (3a) is subsequently processed so that it lies flush with the narrow side (1a).

7. Method according to one of the preceding claims **characterised in that** prior to being introduced or inserted, the carrier material (3) is provided with at least one fixing element (12).

8. Method according to one of the preceding claims **characterised in that** the recess (1b) is created during or through introducing the carrier material (3).

9. Board-shaped product (1) of wood or wood substitutes, having an electric or electronic component (2) in the form of an RFID component comprising an individualising code and introduced on the narrow side (1a) into a recess (1b), wherein the component (2) is provided on, against or in a carrier material (3), which is inserted or introduced at least in part with keyed engagement into the recess (1b), **characterised in that** the recess (1b) is a groove wherein after inserting or introducing the carrier material (3) an edging process is carried out along the narrow side (1a).

10. Product according to claim 9 **characterised in that** the carrier material (3) has an exterior shape which is formed at least in part more or less complementary in relation to the recess (1b).

11. Product according to one of the preceding claims 9 or 10 **characterised in that** the recess (1b) is a groove which has in longitudinal section a circular segment shape or circular arc shape.

12. Product according to one of claims 9 to 11 **characterised in that** the carrier material is a wood material or plastics.

13. Product according to one of claims 9 to 12 **characterised in that** the carrier material (3) is formed by at least two layers, between which is arranged the component (2).

14. Product according to one of claims 9 to 13 characterised that the component (2) is cast or injection-moulded at least in part more particularly with the carrier material.

15. Product according to one of claims 9 to 14 **characterised in that** the carrier material (3) is formed with the component (2) as a dowel, board, card, bar, cube or screw.

16. Product according to one of claims 9 to 15 **characterised in that** the carrier material (3) is provided with at least one fixing element (12).

17. Device for processing board-shaped products (1) of wood or wood substitutes according to one of claims 9 to 16, having a processing unit (4) for introducing the groove into the narrow side (1a) of the product, and a feed mechanism (5) for feeding the component (2) comprising the individualising code and which is to be inserted or introduced into the recess (1b) and is provided on, against or in a carrier material (3), **characterised in that** the device has a further processing unit with which the edge processing of the narrow side (1a) can be carried out.

18. Device according to claim 17 **characterised in that** the feed device has a slider (5) and a supply (15, 13) for supplying the components (2) which are provided in, on or against the carrier material (3) and are to be introduced or inserted, wherein the slider (5) can be moved in at least one direction (Y) transversely to the narrow side (1a) of the product (1) which is, or is to be, provided with the recess (1b).

19. Device according to claim 18 **characterised in that** the feed device (5) can be moved along the narrow side (1a) of the product (1) which is, or is to be, provided with the recess (1b).

20. Device according to one of claims 17 to 19 **characterised in that** a processing unit (16) is further provided which applies a fixing element (12) into or onto the carrier material (3).

## Revendications

1. Procédé d'usinage de produits en forme de plaques (1) en bois ou en matériaux de remplacement du bois, dans lequel le produit en forme de plaque (1) est pourvu, dans la région d'un côté étroit (1a) d'un composant (2) électrique ou électronique, qui présente une identification individuelle, sachant que, dans ce but, un évidement (1b) est pratiqué sur le côté étroit (1a), le composant (2) étant disposé sur, à ou dans un matériau de support (3), qui est introduit dans l'évidement (1b),
**caractérisé en ce que**,
après l'introduction du matériau de support (3), un bordage du côté étroit (1a) est exécuté.

2. Procédé selon la revendication 1,
**caractérisé en ce que**
le composant (2) présentant l'identification individuelle est un composant RFID.

3. Procédé selon l'une des revendications précédentes,
**caractérisé en ce que**
le matériau de support (3) présente une forme extérieure, qui, au moins partiellement, est de conception complémentaire par rapport à l'évidement (1b).

4. Procédé (1) selon l'une des revendications précédentes,
**caractérisé en ce que**
l'évidement (1b) est pratiqué, au moyen d'un dispositif de sciage (4), sous la forme d'une rainure présentant une coupe longitudinale approximativement en forme de segment de cercle ou d'arc de cercle.

5. Procédé (1) selon l'une des revendications précédentes,
**caractérisé en ce que**
le matériau de support (3) est introduit ou installé de manière à ce qu'il soit en saillie du côté étroit (la), avec une section (3a).

6. Procédé (1) selon la revendication 5,
**caractérisé en ce que**
la section (3a) est réusinée de manière à ce qu'elle soit à fleur du côté étroit (1a).

7. Procédé (1) selon l'une des revendications précédentes,
**caractérisé en ce que**,
avant l'introduction ou l'insertion, le matériau de support (3) est pourvu d'au moins un élément de fixation (12) .

8. Procédé selon l'une des revendications précédentes,
**caractérisé en ce que**
l'évidement (1b) est effectué lors ou par l'insertion du matériau de support (3).

9. Produit en forme de plaque (1) en bois ou en matériaux de remplacement du bois,
avec un composant électrique ou électronique (2) présentant une identification individuelle, un composant RFID, qui est installé sur le côté étroit (la), dans un évidement (1b),
sachant que le composant (2) est agencé sur, à ou dans un matériau de support (3), qui est introduit ou inséré, au moins partiellement en engagement géométrique dans l'évidement (1b),
**caractérisé en ce que**
l'évidement (1b) est une rainure, sachant que, après l'introduction ou l'insertion du matériau de support (3), un bordage du côté étroit (1a) est exécuté.

10. Produit selon la revendication 9,
**caractérisé en ce que**
le matériau de support (3) présente une forme extérieure, qui, au moins partiellement, est de conception complémentaire par rapport à l'évidement (1b).

11. Produit selon l'une des revendications précédentes 9 ou 10,
**caractérisé en ce que**
l'évidement (1b) est une rainure, qui présente une coupe longitudinale approximativement en forme de segment de cercle ou d'arc de cercle.

12. Produit selon l'une des revendications 9 à 11,
**caractérisé en ce que**
le matériau de support est un matériau en bois ou un matériau synthétique.

13. Produit selon l'une des revendications 9 à 12,
**caractérisé en ce que**
le matériau de support (3) est formé par au moins deux couches, entre lesquelles le composant (2) est disposé.

14. Produit selon l'une des revendications 9 à 13,
**caractérisé en ce que**
le composant (2) est en particulier refondu ou remoulé, au moins partiellement, avec le matériau de support.

15. Produit selon l'une des revendications 9 à 14,
**caractérisé en ce que**
le matériau de support (3) est formé avec le composant (2) en tant que cheville, plaque, carte, barre, parallélépipède ou vis.

16. Produit selon l'une des revendications 9 à 15,
**caractérisé en ce que**,
sur le matériau de support (3), est prévu au moins un élément de fixation (12).

17. Dispositif d'usinage de produits en forme de plaques (1) en bois ou en matériaux de remplacement du bois selon l'une des revendications 9 à 16, avec un groupe d'usinage (4) pour la réalisation de la rainure dans le côté étroit (1a) du produit, et une installation d'alimentation (5) pour l'amenée du composant (2) pourvu d'une identification d'individualisation, qui, agencé sur, à ou dans un matériau de support (3), doit être introduit ou inséré dans un évidement (1b),
**caractérisé en ce que**
le dispositif présente un autre groupe d'usinage, avec lequel un bordage du côté étroit (1a) peut être exécuté.

18. Dispositif selon la revendication 17,
**caractérisé en ce que**
l'installation d'alimentation présente une coulisse (5) et un stock (15, 13) pour le stockage du composant (2) devant être introduit dans ou agencé sur un matériau de support (3), sachant que la coulisse (5) peut être déplacée au moins dans une direction (Y) transversalement par rapport au côté étroit (1a) du produit (1) pourvu ou à pourvoir de l'évidement (1b)

19. Dispositif selon la revendications 18,
**caractérisé en ce que**
l'installation d'alimentation (5) peut être déplacée le long du côté étroit (1a) du produit (1) pourvu ou à pouvoir de l'évidement (1b).

20. Dispositif selon l'une des revendications 17 à 19,
**caractérisé en ce que**,
de plus, est prévue une unité d'usinage (16), qui agence un élément de fixation (12) dans le matériau de support (3) ou sur le matériau de support (3).
